# EUROPÄISCHE PATENTSCHRIFT

(11) **EP 2 538 262 B1**
(45) Veröffentlichungstag und Bekanntmachung des Hinweises auf die Patenterteilung: **16.08.2017**
(21) Anmeldenummer: 12173155.8
(22) Anmeldetag: 22.06.2012
(51) Int. Cl.: G02B 21/16, G02B 21/36, G01N 21/64

(54) **Verfahren und lichtmikroskopische Einrichtung zur bildlichen Darstellung einer Probe**
Method and light-microscopic device to show a sample as an image
Procédé et dispositif de microscopie optique destinés à la représentation imagée d'un échantillon

(30) Priorität: 22.06.2011 DE 102011051278
(43) Veröffentlichungstag der Anmeldung: 26.12.2012
(73) Patentinhaber: Leica Microsystems CMS GmbH, 35578 Wetzlar (DE)
(72) Erfinder: Dr. Fölling, Jonas, 69115 Heidelberg (DE)
(74) Vertreter: Schaumburg und Partner Patentanwälte mbB

(56) Entgegenhaltungen:
- WO-A1-2004/034124
- DE-A1- 10 361 327
- DE-A1-102004 057 451
- US-A1- 2008 182 336
- US-B1- 7 675 045

## Beschreibung

Die Erfindung betrifft ein Verfahren zur bildlichen Darstellung einer Probe unter Verwendung einer lichtmikroskopischen Einrichtung nach dem Oberbegriff des Anspruchs 1. Ferner betrifft die Erfindung eine lichtmikroskopische Einrichtung nach dem Oberbegriff des Anspruchs 8.

In jüngerer Vergangenheit wurden lichtmikroskopische Abbildungsverfahren entwickelt, mit denen sich basierend auf einer sequentiellen, stochastischen Lokalisierung von einzelnen Markern, insbesondere Fluoreszenzmolekülen, Proben darstellen lassen, die kleiner sind als die beugungsbedingte Auflösungsgrenze klassischer Lichtmikroskope. Solche Verfahren sind beispielsweise beschrieben in WO 2006/127692 A2; DE 10 2006 021 317 B3; WO 2007/128434 A1, US 2009/0134342 A1; DE 10 2008 024 568 A1; "Subdiffraction-limit imaging by stochastic optical reconstruction microscopy (STORM)", Nature Methods 3, 793-796 (2006), M. J. Rust, M. Bates, X. Zhuang; "Resolution of Lambda/10 in fluorescence microscopy using fast single molecule photo-switching", Geisler C. et al, Appl. Phys. A, 88, 223-226 (2007). Dieser neue Zweig der Mikroskopie wird auch als Lokalisierungsmikroskopie bezeichnet. Die angewandten Verfahren sind in der Literatur z.B. unter den Bezeichnungen (F)PALM ((Fluorescence) Photoactivation Localization Microscopy), PALMIRA (PALM with Independently Running Acquisition), GSD(IM) (Ground State Depletion Individual Molecule return) Microscopy) oder (F)STORM ((Fluorescence) Stochastic Optical Reconstruction Microscopy) bekannt.

Den neuen Verfahren ist gemein, dass die abzubildende Probe mit Markern präpariert werden, die über zwei unterscheidbare Zustände verfügen, nämlich einen "hellen" Zustand und einen "dunklen" Zustand. Werden beispielsweise Fluoreszenzfarbstoffe als Marker verwendet, so ist der helle Zustand ein fluoreszenzfähiger Zustand und der dunkle Zustand ein nicht fluoreszenzfähiger Zustand. Zur Abbildung einer Probe mit einer Auflösung, die höher als die klassische Auflösungsgrenze der Abbildungsoptik ist, wird nun wiederholt eine kleine Teilmenge der Marker in den hellen Zustand überführt. Diese "aktive" Teilmenge bildet eine Markerstruktur, deren einzelne, in den hellen Zustand überführten Marker einen mittleren Abstand voneinander haben, der größer als die Auflösungsgrenze der Abbildungsoptik ist. Die jeweilige Markerstruktur wird dann auf einen räumlich auflösenden Bildsensor abgebildet, der die einzelnen Marker in Form von räumlich voneinander trennbaren Lichtverteilungen erfasst.

Auf diese Weise wird eine Vielzahl von Einzelbildern aufgenommen, in denen jeweils eine andere Markerstruktur abgebildet ist. In einem Bildanalyse-Prozess werden dann in jedem Einzelbild die Schwerpunktpositionen der Lichtverteilungen bestimmt, die die im hellen Zustand befindlichen Marker darstellen. Die aus den Rohdaten-Einzelbildern ermittelten Schwerpunktpositionen der Lichtverteilungen werden dann in einer Gesamtdarstellung in Form eines Gesamtbildes zusammengetragen. Das durch diese Gesamtdarstellung entstehende hochaufgelöste Gesamtbild spiegelt die Verteilung der Marker wider.

Für eine repräsentative Wiedergabe der abzubildenden Probe müssen ausreichend viele Markersignale detektiert werden. Da jedoch die Anzahl an Markern in der jeweils aktiven Markerstruktur durch den minimalen mittleren Abstand, den zwei Marker im hellen Zustand voneinander haben müssen, limitiert ist, müssen sehr viele Einzelbilder aufgenommen werden, um die Probe vollständig abzubilden. Typischerweise liegt die Anzahl an Einzelbildern in einem Bereich von 10.000 bis 100.000.

Die für die Aufnahme eines Einzelbildes benötigte Zeit ist nach unten hin durch die maximale Bildaufnahmerate des Bildsensors limitiert. Dies führt zu vergleichsweise langen Gesamtaufnahmezeiten für eine für die Gesamtdarstellung benötigte Sequenz von Einzelbildern. So kann die Gesamtaufnahmezeit bis zu einigen Stunden betragen.

Über diese lange Gesamtaufnahmezeit kann es in Folge thermischer Effekte, beispielsweise thermischer Ausdehnung, Schrumpfung oder Verspannung der mechanischen Komponenten des Lichtmikroskops zu einer Drift der abzubildenden Probe relativ zur Abbildungsoptik kommen. Da für die Erstellung eines hochaufgelösten Gesamtbildes alle Einzelbilder nach der Schwerpunktbestimmung zusammengeführt werden, verschlechtert jede Relativbewegung zwischen Probe und Abbildungsoptik, die während der Aufnahme zweier aufeinanderfolgender Einzelbilder auftritt, die Ortsauflösung des Gesamtbildes.

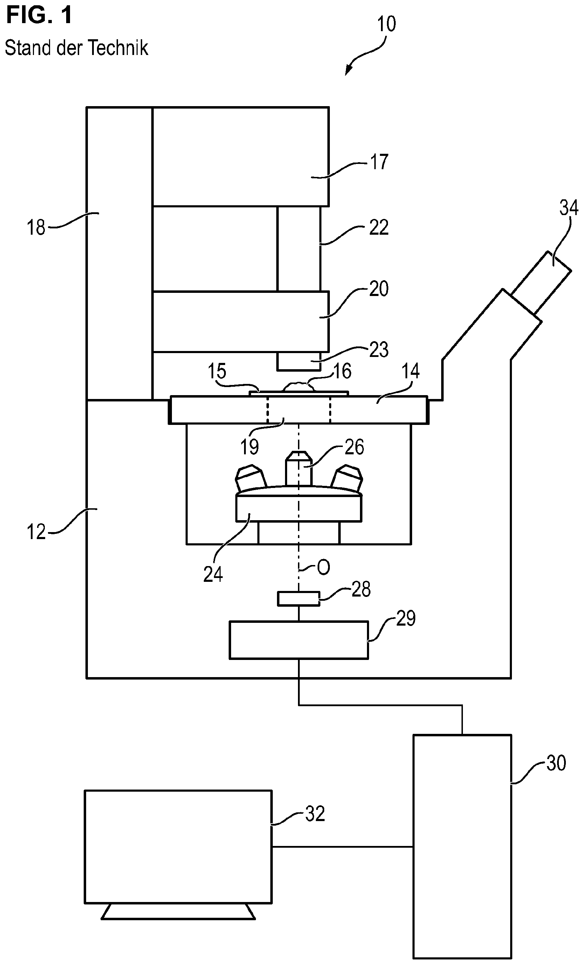

Die vorstehend beschriebene Problematik soll im Folgenden anhand der Figur 1 veranschaulicht werden.

Figur 1 zeigt eine vereinfachte Darstellung eines herkömmlichen inversen Lichtmikroskops 10. Das Lichtmikroskop 10 weist ein Stativ 12 auf, auf dem ein Probentisch 14 aufliegt. An dem Probentisch 14 ist ein Probenhalter 15 angebracht, auf dem eine abzubildende Probe 16 angeordnet ist.

Die Probe 16 wird von einer Lichtquelle 17 beleuchtet, die oberhalb des Probentisches 14 angeordnet ist. Die Lichtquelle 17 ist an einem Schwenkarm 18 montiert. An dem Schwenkarm 18 ist auch ein Halter 20 angebracht, der verschiedene, in Figur 1 nicht gezeigte optische Systeme enthält, die dazu dienen, unterschiedliche Beleuchtungsmodi wie beispielsweise eine standardmäßige Durchlichtbeleuchtung oder eine Phasenkontrastbeleuchtung zu realisieren. Hierzu wird das für den jeweiligen Beleuchtungsmodus vorgesehene optische System in dem Halter 20 in den in Figur 1 mit 22 angedeuteten Beleuchtungsstrahlengang eingeschwenkt. Das von der Lichtquelle 17 abgegebene Beleuchtungslicht wird über einen Kondensor 23, der an der Unterseite des Halters 20 angebracht ist, auf die Probe 16 gelenkt. Um die Handhabung der Probe 16 zu erleichtern, kann der Schwenkarm 18 mitsamt den vorstehend genannten optischen Systemen von dem Probentisch 14 weggeklappt werden.

Unterhalb des Probentisches 14 befindet sich ein motorisierter Objektivrevolver 24, der mehrere Objektive 26 trägt. Die Objektive 26 sind durch Drehen des Objektivrevolvers 24 um die in Figur 1 mit O bezeichnete optische Achse O wahlweise in den durch die optische Achse O festgelegten Abbildungsstrahlengang einschwenkbar. Das gerade in den Abbildungsstrahlengang eingeschwenkte Objektiv 26 bildet die Probe 16 durch eine in dem Probentisch 14 ausgebildete Durchgangsöffnung 19 hindurch auf einen Bildsensor 28 ab. Der Bildsensor 28 ist mit einem Sensortreiber 29 verbunden, der den Bildsensor 28 ansteuert. Der Sensortreiber 29 erzeugt außerdem aus Sensorsignalen, die er von dem Bildsensor 28 empfängt, Bildsignale zur weiteren Bildverarbeitung.

Das Mikroskopstativ 12 ist mit einem Steuergerät 30, z.B. einem Computer, gekoppelt, über den die Mikroskopfunktionen und insbesondere die Bildverarbeitung gesteuert werden können. Hierzu empfängt das Steuergerät 30 die von dem Sensortreiber 29 erzeugten Bildsignale. Das Steuergerät 30 ist mit einem Monitor 32 verbunden, auf dem ein an Hand der verarbeiteten Bildsignale erzeugtes Probenbild dargestellt wird. Das Probenbild kann zusätzlich über Okulare 34 betrachtet werden.

Bei dem Lichtmikroskop 10 nach Figur 1 ist der Objektivrevolver 24 an dem U-förmigen Stativ 12 montiert, so dass die bilddriftrelevante Distanz zwischen dem abbildenden Objektiv 26 und der Probe 16 vergleichsweise groß ist. So ist die Probe 16 über den Probenhalter 15, den Probentisch 14, das U-förmige Stativ 12 und den Objektivrevolver 24 mit dem Objektiv 26 gekoppelt. Aufgrund dieser vergleichsweise großen Distanz ist das Lichtmikroskop 10 nach Figur 1 insbesondere anfällig für thermische Instabilitäten, die sich über die Distanz gleichsam aufsummieren. Solche thermischen Instabilitäten können in Temperaturschwankungen der Umgebungsluft oder in dem Lichtmikroskop 10 selbst, etwa durch sich erwärmende elektronische Bauelemente, begründet sein. Die Temperaturschwankungen führen beispielsweise dazu, dass aus Metall bestehende Bauteile, welche die Probe 16 und das Objektiv 26 in Position halten, durch thermische Expansion oder Kontraktion ihre Größe ändern, wodurch es zu einer Relativbewegung von Probe 16 und Objektiv 26 kommen kann.

Wie kritisch solche thermischen Instabilitäten im Bereich der hochauflösenden Lokalisierungsmikroskopie, in der die erreichten Auflösungen häufig unter einem Wert von 20 nm liegen, sein können, zeigt folgende Abschätzung. Aluminium besitzt als Werkstoff, der typischerweise bei der Fertigung metallischer Mikroskopbauteile zum Einsatz kommt, über einen thermischen Ausdehnungskoeffizienten von 23 · 10-6 K⁻¹. Nimmt man nun beispielhaft an, dass bei dem in Figur 1 gezeigten Lichtmikroskop 10 die bilddriftrelevante Distanz, über die die Probe 16 mit dem Objektiv 26 gekoppelt ist, 10 cm beträgt und diese Distanz über aus Aluminium bestehende Mikroskopbauteile vermittelt wird, so ergibt sich eine mechanische Drift um 2,3 µm pro K Temperaturänderung. Setzt man diese Temperaturänderung in Relation zu der vorstehend genannten räumlichen Auflösung, so wird unmittelbar ersichtersichtlich, dass Temperaturschwankungen die Aufnahmequalität erheblich beeinträchtigen können.

Bei dem in Figur 1 gezeigten Lichtmikroskop 10 befinden sich driftinduzierende Wärmequellen beispielsweise in der aus elektronischen Bauelementen gebildeten Sensortreiber 29, die das Stativ 12 erwärmt. Gleiches gilt für motorisierte Bauteile, die beispielsweise dazu dienen, den Objektivrevolver 24 zu drehen. Des Weiteren produzieren auch die Lichtquelle 17 als auch in dem Halter 20 vorhandene mechanische Aktoren Wärme, die sich nachteilig auf die Abbildungsgenauigkeit auswirken kann.

Zur Vermeidung thermisch induzierter Drift wird in der WO 2004/034124 A1 vorgeschlagen, an einem Lichtmikroskop Temperatursensoren anzubringen, die Temperaturschwankungen erfassen. Über diese Temperaturschwankungen werden Stellgrößen bestimmt, mit denen Motoren angesteuert werden, um den Probentisch während der Abbildung der Probe driftkompensierend zu bewegen. Diese während der Bildaufnahme vorzunehmende Lageregelung des Probentisches ist technisch vergleichsweise aufwendig.

Ein Verfahren nach dem Oberbegriff des Anspruchs 1 ist aus der US2008/182336 A1 bekannt.

Aufgabe der Erfindung ist es, ein Verfahren und eine lichtmikroskopische Einrichtung zur bildlichen Darstellung einer Probe eingangs genannter Art so weiterzubilden, dass driftinduzierte Abbildungsungenauigkeiten einfach und zuverlässig vermieden werden können.

Die Erfindung löst diese Aufgabe für das Verfahren durch die Merkmale des Anspruchs 1 und für die Einrichtung durch die Merkmale des Anspruchs 8. Vorteilhafte Weiterbildungen sind in den jeweiligen Unteransprüchen angegeben.

Erfindungsgemäß wird während der Aufnahme der Sequenz von Einzelbildern eine bilddriftinduzierende Temperaturgröße gemessen. Anhand vorbestimmter Zuordnungsdaten wird diese bilddriftinduzierende Temperaturgröße eine temperaturabhängige Driftgröße zugeordnet. Schließlich werden die Schwerpunktpositionen, die aus den auf dem Bildsensor erzeugten Lichtverteilungen ermittelt werden, anhand der Driftgröße korrigiert. Diese korrigierten Schwerpunktpositionen können dann zu einem driftfreien Gesamtbild der Probe überlagert werden.

Die Erfindung macht sich zu Nutze, dass bei dem angewandten Verfahren die relevante Bildinformation, die zur bildlichen Darstellung der Probe verwendet wird, nicht in den während der Aufnahme der jeweiligen Einzelbilder gesammelten Rohdaten selbst, sondern in den (üblicherweise nach der eigentlichen Messung) aus diesen Rohdaten gewonnenen Schwerpunktpositionen enthalten ist, die aus den auf dem Bildsensor erzeugten Lichtverteilungen ermittelt werden. Dadurch ist es möglich, die Driftkorrektur nachträglich, d.h. nach Aufnahme der die Einzelbilder repräsentierenden Rohdaten, vorzunehmen. Dies ist deutlich einfacher, als etwa die Einzelbilder selbst entsprechend den ermittelten Driftgrößen nachträglich zu verschieben, da dies mit einem erheblichen Bildbearbeitungsaufwand verbunden ist.

Die Erfindung ermöglicht es also, während der eigentlichen Messung Driftbewegungen zuzulassen und diese erste nachträglich unter Heranziehung der aus den Rohdaten gewonnen Schwerpunktpositionen zu korrigieren.

Hierzu wird während der Messung, d.h. während der Aufnahme der Einzelbilder, die bilddriftinduzierende Temperaturgröße aufgezeichnet und abgespeichert. Dies kann kontinuierlich oder in vorbestimmten zeitlichen Abständen erfolgen. Wesentlich ist jedenfalls, dass die Temperaturgröße während der Bildaufnahme so aufgezeichnet wird, dass sie später, d.h. nach der eigentlichen Messung, den jeweiligen Einzelbildern und damit den aus diesen Einzelbildern gewonnenen Schwerpunktpositionen zugeordnet werden kann. Aus der während der Messung aufgezeichneten Temperaturgröße lässt sich dann die temperaturabhängige Driftgröße bestimmen, die der Driftkorrektur zu Grunde gelegt wird.

Der Erfindung liegt u.a. die Erkenntnis zugrunde, dass temperaturinduzierte Driftbewegungen in den Bauteilen des Lichtmikroskops typischerweise ein in hohem Maße reproduzierbares Verhalten zeigen. In Abhängigkeit der konkret vorliegenden geometrischen Verhältnisse sowie der zur Fertigung des Lichtmikroskops verwendeten Werkstoffe bewegen sich die Mikroskopbauteile unter dem Einfluss einer Temperaturschwankung häufig in vorhersehbarer Weise. Dies gilt sowohl im Hinblick auf die Größe dieser Bewegung als auch im Hinblick auf die Bewegungsrichtung. Die Kenntnis dieses reproduzierbaren Verhaltens wird erfindungsgemäß dazu genutzt, Zuordnungsdaten bereitzustellen, welche die Temperaturgröße in Beziehung zu der temperaturabhängigen Driftgröße setzen. Anhand dieser Zuordnungsdaten kann dann der während der Aufnahme der Einzelbilder gemessenen Temperaturgröße die entsprechende temperaturabhängige Driftgröße zugeordnet werden, mit der die ermittelten Schwerpunktpositionen nach der Bildaufnahme korrigiert werden.

Vorzugsweise werden die Zuordnungsdaten experimentell bestimmt und in der lichtmikroskopischen Einrichtung gespeichert. Zweckmäßig ist es beispielsweise, im Vorfeld der eigentlichen Bildaufnahme einmal eine Messreihe durchzuführen, in der die Driftgröße in Abhängigkeit der Temperaturgröße bestimmt und dann beispielsweise in Form einer Tabelle, einer Eichkurve oder dergleichen abgespeichert wird. Die Zuordnungsdaten werden vorzugsweise nur einmal, z.B. vor Auslieferung der Einrichtung an den Kunden, ermittelt und stehen später zur Ermittlung der Driftgröße zur Verfügung.

Zur experimentellen Bestimmung der Zuordnungsdaten wird vorzugsweise eine Referenzstruktur mit mindestens einem Referenzmarker bereitgestellt. Anschließend wird die bilddriftinduzierende Temperaturgröße auf mehrere Referenztemperaturwerte eingestellt. Für jeden Referenztemperaturwert wird dann ein Referenzeinzelbild der Referenzstruktur aufgenommen, wobei der Referenzmarker der jeweiligen Referenzstruktur mittels der Abbildungsoptik in Form einer Referenzlichtverteilung auf dem Bildsensor abgebildet wird. Für jeden Referenztemperaturwert wird anschließend eine Referenzschwerpunktposition der zugehörigen Referenzlichtverteilung ermittelt. Aus der Veränderung der Referenzschwerpunktpositionen in Abhängigkeit der Referenztemperaturwerte wird schließlich die temperaturabhängige Driftgröße bestimmt. In dieser vorteilhaften Ausgestaltung werden also die Zuordnungsdaten nach einem Verfahren ermittelt, das im Wesentlichen dem Verfahren entspricht, nach dem später die lichtmikroskopische Einrichtung zur eigentlichen Bildaufnahme betrieben wird. Damit ist sichergestellt, dass die in den Zuordnungsdaten niedergelegte Driftgröße die zu erwartende Bilddrift präzise widerspiegelt.

Vorzugsweise wird die Temperatur mindestens eines Bauteils der lichtmikroskopischen Einrichtung als bilddriftinduzierende Temperaturgröße gemessen. Alternativ oder zusätzlich kann auch die Umgebungstemperatur als Temperaturgröße erfasst werden. Die Messung der Temperatur direkt an der lichtmikroskopischen Einrichtung verspricht jedoch eine genauere Erfassung der die Bilddrift beeinflussenden Verhältnisse.

In einer vorteilhaften Weiterbildung wird die Temperatur in oder an einem Probentisch und/oder in oder an einer für die Abbildungsoptik vorgesehenen Haltevorrichtung und/oder in oder an einem Stativ, auf dem der Probentisch aufliegt, gemessen. Jedes der vorstehend genannten Bauteile ist mittelbar oder unmittelbar mit der abzubildenden Probe oder der Abbildungsoptik gekoppelt. Eine thermisch bedingte Bewegung dieser Bauteile verschlechtert demnach das Abbildungsvermögen der lichtmikroskopischen Einrichtung signifikant. Indem während der Messung die Temperatur eines solchen Bauteils gemessen und anschließend eine Korrektur der Schwerpunktpositionen in Abhängigkeit der gemessenen Temperatur durchgeführt wird, kann so ein thermisch induzierter Bildversatz besonders zuverlässig kompensiert werden. Die Temperaturmessung kann dabei an der Oberfläche und/oder im Inneren des jeweiligen Bauteils gemessen werden. Vorteilhaft ist beispielsweise eine Temperaturmessung an einer Stelle, an der sich eine Wärmequelle befindet, die bilddriftrelevante Temperaturschwankungen in oder an der lichtmikroskopischen Einrichtung verursachen kann. In Frage kommen insbesondere Stellen, an denen z.B. ein motorischer Antrieb befindet.

In einer bevorzugten Ausgestaltung wird die gemessene Temperaturgröße um einen Trägheitskorrekturwert geändert und die Driftgröße anhand der geänderten Temperaturgröße bestimmt. Diese Weiterbildung ist insbesondere dann von Vorteil, wenn die Temperaturmessung nur an der Oberfläche des jeweiligen Bauteils erfolgt. Damit wird dem Umstand Rechnung getragen, dass eine Temperaturmessung an der Oberfläche eines Bauteils das bilddriftrelevante Temperaturverhalten des Bauteils selbst, insbesondere dessen Trägheit, häufig nicht präzise genug widerspiegelt. So ist beispielsweise denkbar, dass ein an der Oberfläche des Bauteils angebrachter Temperaturfühler, der thermisch weitgehend unisoliert direkt der Außenluft ausgesetzt ist, eine kurzzeitige Temperaturschwankung in der Umgebung der lichtmikroskopischen Einrichtung erfasst, die so infolge der thermischen Trägheit des Bauteils nicht in eine entsprechende Bilddrift umgesetzt wird. Bei dieser Weiterbildung wird also die thermische Trägheit des Bauteils nachträglich gleichsam simuliert, um das bilddriftrelevante thermische Verhalten des Bauteils zur Ermittlung einer geeigneten Driftgröße präzise wiederzugeben. Insbesondere gestaltet sich dadurch eine erfindungsgemäße Nachrüstung einer schon in Betrieb befindlichen lichtmikroskopischen Einrichtung einfacher, da es bei Anwendung der vorstehend erläuterten Trägheitskorrektur unter Umständen schon ausreichend ist, einen Temperaturfühler lediglich an der Oberfläche eines driftanfälligen Bauteils anzubringen und trotzdem eine präzise Driftkorrektur zu erzielen.

Vorzugsweise wird der Trägheitskorrekturwert in Abhängigkeit der Änderungsrate eingestellt, mit der sich die gemessene Temperaturgröße zeitlich ändert. Beispielsweise ist denkbar, sehr kurzzeitige Temperaturschwankungen etwa durch eine zeitliche Mittelung der gemessenen Temperaturgröße bei der Ermittlung der korrigierenden Driftgröße weitgehend unberücksichtigt zu lassen, da die sich erfahrungsgemäß nicht auf die Bilddrift auswirken.

Bei einer vorteilhaften Weiterbildung der zur Durchführung des erfindungsgemäßen Verfahrens bestimmten lichtmikroskopischen Einrichtung ist ein nichtflüchtiger Datenspeicher vorgesehen, in dem die Zuordnungsdaten gespeichert sind. In diesem Datenspeicher können die Zuordnungsdaten, die beispielsweise vor der Inbetriebnahme der Einrichtung experimentell bestimmt werden, abgelegt und dann im eigentlichen Betrieb der Einrichtung genutzt werden.

Die Erfindung wird im Folgenden anhand der Figuren näher erläutert. Darin zeigen:
Figur 1 ein Lichtmikroskop nach dem Stand der Technik;
Figur 2 ein erfindungsgemäßes Lichtmikroskop als Ausführungsbeispiel;
Figur 3 eine Zuordnungstabelle, anhand der während der Bildaufnahme gemessenen Temperaturwerten Driftversatzwerte zugeordnet werden;
Figur 4 ein Flussdiagramm, das ein Ausführungsbeispiel des erfindungsgemäßen Verfahrens zeigt;
Figur 5 ein Flussdiagramm, das eine in dem Verfahren nach Figur 4 durchgeführte Bildverarbeitung zeigt;
Figur 6 eine schematische Darstellung mehrerer aufeinander folgender Einzelbilder, die jeweils die erfassten Lichtverteilungen der einzelnen Marker zeigen;
Figur 7 die in Figur 6 gezeigten Einzelbilder nach Bestimmung der Schwerpunktpositionen;
Figur 8 eine schematische Darstellung, welche die Wirkung einer Bilddrift veranschaulicht, die während der Aufnahme zweier Einzelbilder auftritt; und
Figur 9 die beiden Einzelbilder nach Figur 8 nach der erfindungsgemäßen Korrektur der Bilddrift.

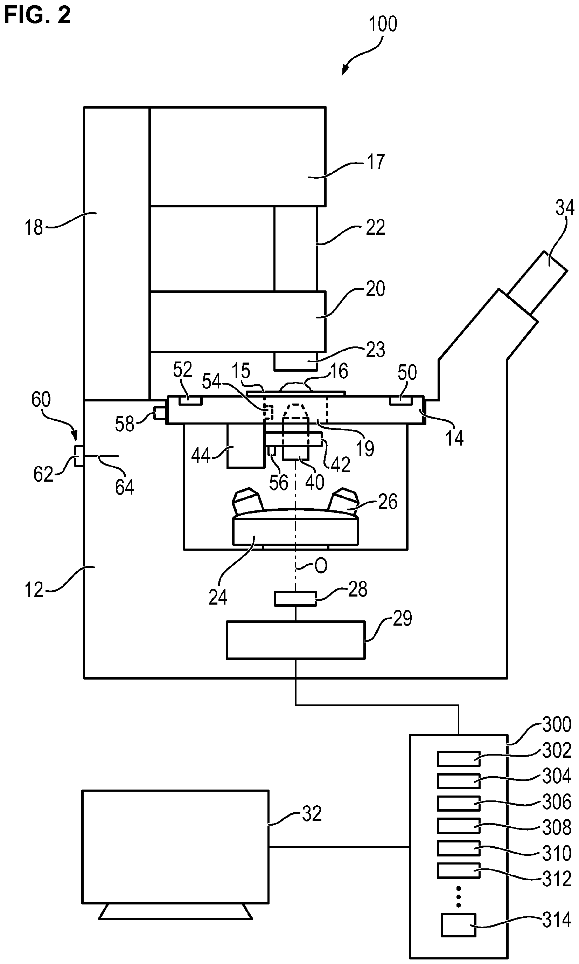

Figur 2 zeigt ein Lichtmikroskop 100 als Ausführungsbeispiel der erfindungsgemäßen Einrichtung. Im Folgenden werden nur diejenigen Komponenten und Merkmale des Lichtmikroskops 100 beschrieben, die Letzteres von dem herkömmlichen Lichtmikroskop 10 nach Figur 1 unterscheiden. Diejenigen Komponenten des Lichtmikroskops 100, die auch schon in der herkömmlichen Einrichtung nach Figur 1 vorhanden sind, sind mit den in Figur 1 vorgesehenen Bezugszeichen versehen und werden im Folgenden nicht nochmals beschrieben.

Das Lichtmikroskop 100 unterscheidet sich von dem in Figur 1 gezeigten Mikroskop 10 zunächst dadurch, dass zusätzlich zu dem motorisierten Objektivrevolver 24, an dem die Objektive 26 gehalten sind, ein weiteres Aufnahmeobjektiv 40 vorhanden ist. Das Aufnahmeobjektiv 40 ist an einem Halter 42, die mit einem an der Unterseite des Probentisches 14 angebrachten piezoelektrischen Aktor 44 gekoppelt ist, gehalten. Der Halter 42 ist im Wesentlichen rotationssymmetrisch zur optischen Achse O ausgebildet. Mittels des piezoelektrischen Aktors 44, der an dem Probetisch 14 verschwenkbar gehalten ist, lassen sich Halter 42 und damit das Aufnahmeobjektiv 40 längs der optischen Achse O bewegen, um das Aufnahmeobjektiv 42 auf die Probe 16 zu fokussieren.

Gegenüber den an dem Objektivrevolver 24 gehaltenen Objektiven 26 hat das zusätzliche Aufnahmeobjektiv 40 im Hinblick auf die während der Bildaufnahme zu erwartende Bilddrift den Vorteil, dass es nicht über das Mikroskopstativ 12, sondern lediglich über den Halter 42 und den Aktor 44 mit dem Probentisch 14 gekoppelt ist, auf dem sich der Probenträger 15 mit der Probe 16 befindet. Somit ist die Distanz, über die das Aufnahmeobjektiv 40 mit der Probe 16 gekoppelt ist, deutlich kleiner als die Distanz, über welche die an dem Objektivrevolver 24 gehaltenen Objektive 26 mit der Probe 16 gekoppelt sind. Zudem trägt auch der Halter 42 in Folge seiner zur optischen Achse O rotationssymmetrischen Ausgestaltung zur Reduzierung der Bilddrift bei, da diese Ausgestaltung bewirkt, dass sich beispielsweise thermische Verspannungen, die an dem Aufnahmeobjektiv 40 rund um die optische Achse O angreifen, gegenseitig aufheben.

Es ist jedoch darauf hinzuweisen, dass die weiter unten im Einzelnen erläuterte erfindungsgemäße Lösung nicht auf die in Figur 2 gezeigte Ausführungsform, bei der das Aufnahmeobjektiv 40 über den Halter 42 und den Aktor 44 an dem Probentisch 14 angebracht ist, beschränkt ist. Sie ist ebenso auf eine herkömmliche Anordnung anwendbar, wie sie beispielsweise in Figur 1 gezeigt ist.

An dem Lichtmikroskop 100 sind an verschiedenen Stellen Temperatursensoren 50, 52, 54, 56, 58 und 60 angeordnet. Im Einzelnen sind die Temperatursensoren 50 und 52 an der Oberseite der Tischplatte 14 beiderseits der Durchgangsöffnung 19 angebracht. Der Temperatursensor 54 ist in der Durchgangsöffnung 19 des Probentisches 14 montiert, während der Temperatursensor 56 ist an dem Halter 42 angebracht ist Der Temperatursensor 58 ist in dem Mikroskopstativ 12 am Übergang zum Probentisch 14 montiert. Der Temperatursensor 60 ist schließlich an der Außenseite des Mikroskopstativs 12 montiert.

Als Temperatursensoren 50, 52, 54, 56, 58 und 60 sind beliebige Bauteile verwendbar, die geeignet sind, die Temperatur in eine auswertbare, vorzugsweise elektrische Größe umzuwandeln. Beispiele hierfür sind Bauteile, die ihren elektrischen Widerstand mit der Temperatur ändern, z.B. Heißleiter, die ihren Widerstand bei Temperaturerhöhung verringern, oder Kaltleiter, die ihren Widerstand bei Temperaturerhöhung vergrößern. Verwendbar sind auch Bauteile, die in Abhängigkeit der Temperatur ein direkt verarbeitbares elektrisches Signal liefern, z.B. Halbleiter-Temperatursensoren.

Die Temperatursensoren 50 bis 60 sind an dem Lichtmikroskop 100 an Stellen angeordnet, an denen eine Temperaturmessung während der Bildaufnahme in später genauer erläuterter Weise die Ermittlung einer temperaturabhängigen Bilddrift ermöglicht. Dabei ist darauf hinzuweisen, dass die in Figur 2 gezeigte Anordnung der Temperatursensoren 50 bis 60 lediglich beispielhaft zu verstehen ist und in der Praxis entsprechend den tatsächlich vorliegenden geometrischen Verhältnissen und der konkreten Anfälligkeit des Lichtmikroskops auf Temperaturschwankungen zu wählen ist. Insbesondere sind im Einzelfall die Anfälligkeit des Probentisches und der eingesetzten Verstellmechanik des Objektivs auf Temperaturschwankungen zu berücksichtigen.

In dem in Figur 2 gezeigten Ausführungsbeispiel sind die Temperatursensoren 50, 52, 54, 56 und 58 an der Oberfläche des Lichtmikroskops 100 oder zumindest oberflächennah montiert. Im Einzelnen sind die beiden Temperatursensoren 50 und 52 dafür vorgesehen, die Temperatur an der Oberseite des Probentisches 14 zu messen. Der in der Durchgangsöffnung 19 montierte Temperatursensor 54 erfasst dagegen die Temperatur im zentralen Bereich des Probentisches 14. Der Temperatursensor 56 erfasst die Temperatur an dem Halter 42. Der Temperatursensor 58 misst schließlich die Temperatur an dem Übergang zwischen dem wärmeerzeugenden Mikroskopstativ 12 und dem Probentisch 14.

Demgegenüber ist der Temperatursensor 60 dafür vorgesehen, die Temperatur im Inneren des Mikroskopstativs 12 zu messen. Er verfügt dementsprechend über einen an der Oberfläche des Mikroskopstativs 12 montierten Sensorkörper 62 und einen daran anschließenden, länglichen Temperaturfühler 64, der in das Innere des Mikroskopstativs 12 eingesetzt ist und dort die Temperatur misst. Wieder ist darauf hinzuweisen, dass diese Anordnung rein beispielhaft zu verstehen ist. So ist es beispielsweise ebenso denkbar, einen dem Temperatursensor 60 entsprechenden Sensor auch an dem Probentisch 14 und/oder dem Halter 42 anzubringen. Auch ist es denkbar, nur einen Teil der Temperatursensoren 50 bis 60, z.B. nur einen einzelnen Sensor, zur Erfassung von bilddriftinduzierenden Temperaturschwankungen vorzusehen.

Das Lichtmikroskop 100 ist mit einem Steuergerät 300 z.B. einem Computer, verbunden. Das Steuergerät 300 dient dazu, die Mikroskopfunktionen und die Bildverarbeitung auf Grundlage der von dem Sensortreiber 29 gelieferten Bildsignalen zu steuern. Hierzu enthält das Steuergerät 300 verschiedene Verarbeitungsmodule 302, 304, 306, 308, 310 und 312, die zusammen mit den Temperatursensoren 50 bis 60 eine Bildverarbeitungseinheit bilden, deren Funktionsweise später genauer erläutert wird. Diese Bildverarbeitungseinheit nutzt Zuordnungsdaten, die in einem in dem Steuergerät 300 vorgesehenen nichtflüchtigen Datenspeicher 314 gespeichert sind.

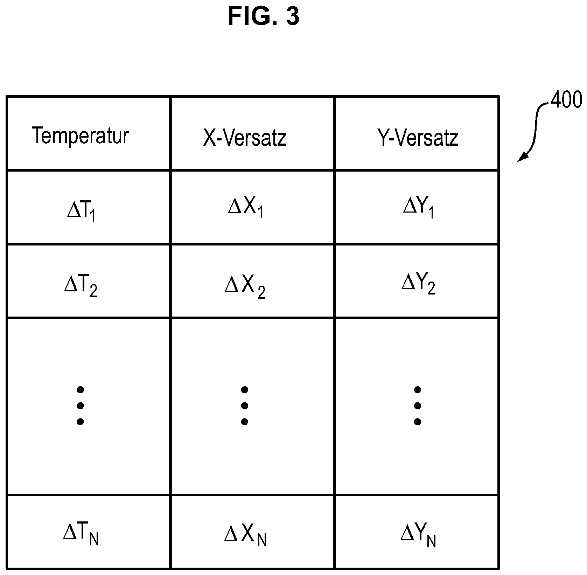

In Figur 3 ist eine Datentabelle 400 als Beispiel für die vorstehend genannten Zuordnungsdaten gezeigt, die in dem Datenspeicher 314 enthalten sind. In der Datentabelle 400 sind Temperaturgrößen ΔT₁, ΔT₂, ..., ΔTₙ angegeben, denen jeweils ein X-Versatzwert ΔX_{1,} ΔX₂, ..., ΔXₙ sowie ein Y-Versatzwert ΔY₁, ΔY₂, ..., ΔYₙ zugeordnet sind. Die Temperaturwerte ΔT₁, ΔT₂, ..., ΔTₙ geben jeweils eine auf eine vorbestimmte Referenztemperatur bezogene Temperaturschwankung an. Die Versatzwerte ΔX₁, ΔX₂, ..., ΔXₙ sowie ΔY₁, ΔY₂, ..., ΔYₙ geben jeweils einen Versatz in X- bzw. Y-Richtung an, um den eine Schwerpunktposition, die aus einer zugehörigen, auf dem Bildsensor 28 erzeugten Lichtverteilung ermittelt wird, in Folge einer angenommenen Bilddrift bei der jeweiligen Temperaturschwankung ΔT₁, ΔT₂, ..., ΔTₙ verschoben ist. Mit X- und Y-Richtung sind dabei im vorliegenden Ausführungsbeispiel senkrecht zueinander verlaufende Richtungen gemeint, die parallel zur Bildebene des Aufnahmeobjektivs 40 liegen.

Die in der Datentabelle 400 angegebenen Zuordnungsdaten werden vor der eigentlichen Inbetriebnahme des Lichtmikroskops 100 experimentell ermittelt und in dem nichtflüchtigen Datenspeicher 314 gespeichert. Sie stehen dann bei der Inbetriebnahme des Lichtmikroskops 100 zur Verfügung, um die nachfolgend beschriebene Driftkorrektur vorzunehmen.

Es ist darauf hinzuweisen, dass die in Figur 3 gezeigte Datentabelle 400 rein beispielhaft zu verstehen ist. So können die Zuordnungsdaten auch in beliebig anderer Form, z.B. in Form einer Eichkurve, bereitgehalten werden. Auch ist es möglich, nicht nur einen zweidimensionalen Versatz in X- und Y-Richtung, sondern einen dreidimensionalen Versatz zu berücksichtigen, in dem eine Verschiebung der jeweiligen Schwerpunktposition auch in einer Z-Richtung längs der optischen Achse O vorgesehen ist.

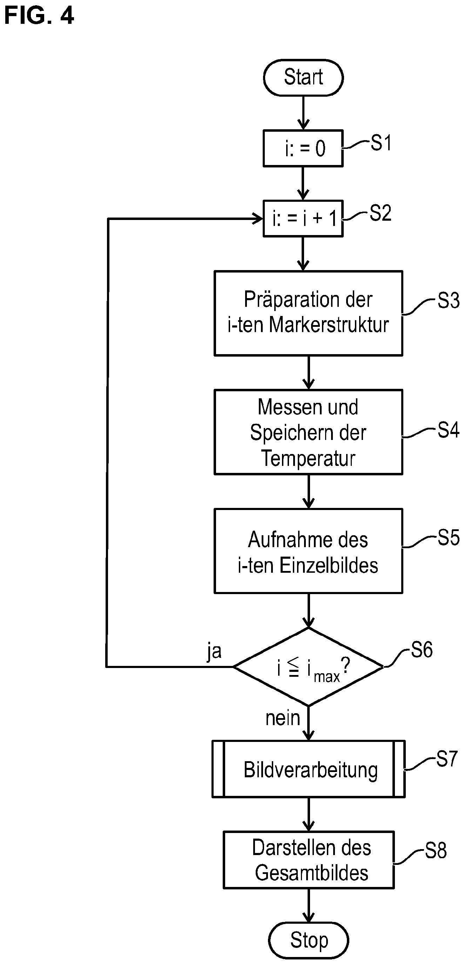

Unter Bezugnahme auf das Flussdiagramm nach Figur 4 soll im Folgenden ein Ausführungsbeispiel zur Durchführung des erfindungsgemäßen Verfahrens erläutert werden.

Nachdem in Schritt S1 eine Laufvariable mit dem Wert Null initialisiert worden ist, tritt der Ablauf in eine durch die Schritte S2 bis S6 gebildete Schleife ein, in der zunächst in Schritt S2 die Laufvariable um eins erhöht wird.

In Schritt S3 wird beim erstmaligen Eintritt in die vorstehend genannte Schleife eine erste Markerstruktur präpariert. Wie eingangs beschrieben, zeichnet sich eine solche Markerstruktur dadurch aus, dass aus einer Gesamtheit von Markern, z.B. Fluoreszenzfarbstoffen, nur ein Teil aktiviert, d.h. in den hellen Zustand überführt wird. Die in dieser Markerstruktur enthaltenen Marker haben dann einen mittleren Abstand, der größer als die Auflösungsgrenze des Aufnahmeobjektivs 42 ist.

In Schritt S4 wird mittels eines der in Figur 2 gezeigten Temperatursensoren 50 bis 60 die Temperatur gemessen und abgespeichert. Zur Speicherung dieser Temperatur dient in dem vorliegenden Ausführungsbeispiel das in der Bildverarbeitungseinheit 300 enthaltene Funktionsmodul 302.

Anschließend wird in Schritt S5 ein Einzelbild der mit der Markerstruktur präparierten Probe 16 aufgenommen, indem die Probe 16 durch das Aufnahmeobjektiv 42 auf den Bildsensor 28 abgebildet wird. Der Sensortreiber 29 erzeugt aus den von dem Bildsensor 28 empfangenen Sensorsignalen Bildsignale, die in dem als Bildspeicher fungierenden Funktionsmodul 304 gespeichert werden.

In Schritt S6 wird abgefragt, ob die Laufvariable i kleiner oder gleich einem Maximalwert iₘₐₓ ist. Ist dies der Fall, so springt der Ablauf zu Schritt S2 zurück, so dass die vorstehend beschriebenen Verfahrensschritte für das nächste Einzelbild durchgeführt werden. Ist dagegen die Laufvariable i größer als der Maximalwert iₘₐₓ, so fährt der Ablauf mit Schritt S7 fort.

Nachdem eine vollständige Sequenz von Einzelbildern nach den Schritten S2 bis S6 abgearbeitet ist, werden die Einzelbilder in Schritt S7 einer Bildverarbeitung unterzogen. In der Bildverarbeitung nach Schritt S7 wird eine nachstehend erläuterte Driftkorrektur vorgenommen.

In Schritt S8 werden schließlich die driftkorrigierten Einzelbilder zu einem Gesamtbild überlagert und das Gesamtbild auf dem Monitor 32 dargestellt.

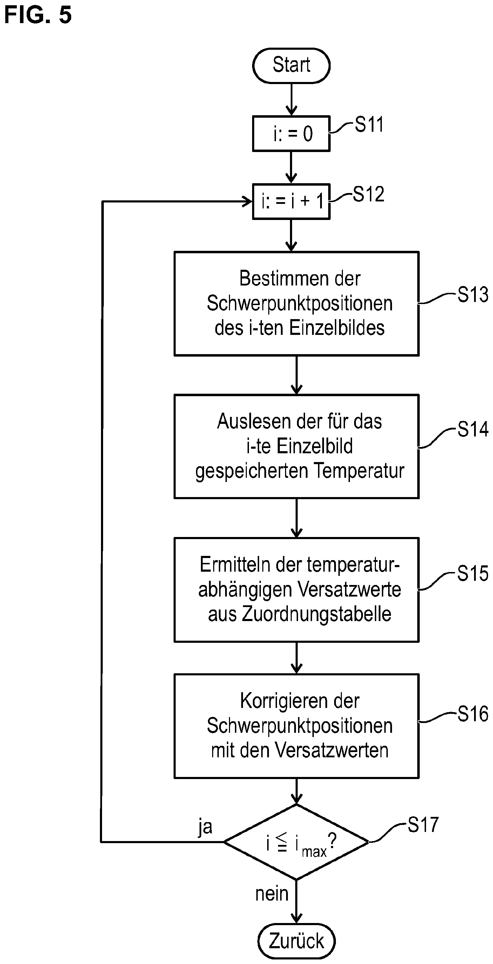

In dem Flussdiagramm nach Figur 5 ist ein Beispiel für die in Schritt S7 durchgeführte Bildverarbeitung gezeigt.

Nachdem in Schritt S11 die Laufvariable i auf den Wert Null initialisiert worden ist, tritt der Ablauf in eine durch die Schritte S12 bis S17 gebildete Schleife ein, die nacheinander für sämtliche Einzelbilder durchgeführt wird.

In Schritt S12 wird zunächst die Laufvariable um den Wert 1 erhöht. In Schritt S13 bestimmt dann das Funktionsmodul 306 aus den in dem Funktionsmodul 304 gespeicherten Bildsignalen die Schwerpunktpositionen des i-ten Einzelbildes. Dabei führt das Funktionsmodul 306 die Bestimmung der Schwerpunktpositionen in an sich bekannter Weise durch, indem es die durch die Bildsignale repräsentierten Lichtverteilungen entsprechend analysiert.

In Schritt S14 liest das Funktionsmodul 308 die für das gerade verarbeitete Einzelbild in Schritt S4 gemessene und in dem Funktionsmodul 302 gespeicherten Temperaturwert aus und ermittelt anschließend in Schritt S15 unter Bezugnahme auf die in dem Datenspeicher 314 gespeicherte Datentabelle die dem gemessenen Temperaturwert zugeordneten Versatzwerte in X- und Y-Richtung.

In Schritt S16 korrigiert dann das Funktionsmodul 310 die Schwerpunktpositionen mit den in Schritt S15 ermittelten temperaturabhängigen Versatzwerten. Diese korrigierte Schwerpunktpositionen zieht dann später das Funktionsmodul 312 zur Darstellung des Gesamtbildes unter Schritt S8 heran.

In Schritt S17 wird geprüft, ob die Laufvariable i kleiner oder gleich dem Maximalwert iₘₐₓ ist. Ist dies der Fall, so tritt der Ablauf wieder in Schritt S12 ein und wiederholt die in den Schritten S13 bis S16 realisierte Driftkorrektur für das nächste Einzelbild. Ist dagegen die Laufvariable i größer als der Maximalwert iₘₐₓ, so ist die Driftkorrektur für sämtliche Einzelbilder abgeschlossen, und der Ablauf fährt mit Schritt S8 nach Figur 4 fort.

In dem in den Figuren 4 und 5 gezeigten Ausführungsbeispiel werden für ein jeweiliges Einzelbild die ermittelten Schwerpunktpositionen jeweils mit dem gleichen temperaturabhängigen Versatzwerten korrigiert, d.h. für jedes Einzelbild sind bei einer gegebenen Temperatur nur ein einziger X- und ein einziger Y-Versatzwert vorgesehen. Es ist jedoch ebenso möglich, durch Bereitstellung entsprechender Zuordnungsdaten für jede Schwerpunktposition separate temperaturabhängige Versatzwerte vorzusehen. Dies ist beispielsweise dann von Vorteil, wenn sich die Bilddrift nicht über das gesamte Einzelbild einheitlich darstellt, sondern an verschiedenen Stellen des Einzelbildes unterschiedlich ist.

Das Ausführungsbeispiel nach den Figuren 4 und 5 beschreibt einen Modus, bei dem zuerst die vollständige Sequenz von Einzelbildern aufgenommen wird (Schritte S2 bis S6), bevor die Einzelbilder der Bildverarbeitung unterzogen werden, d.h. insbesondere die Schwerpunktpositionen der jeweiligen Einzelbilder bestimmt und anschließend mit den temperaturabhängigen Versatzwerten korrigiert werden (Schritt 7; Schritte S12 bis S17). Es ist jedoch ebenso möglich, die Bildverarbeitung gleichsam "online" vorzunehmen, d.h. nach Aufnahme jedes Einzelbildes unmittelbar die Schwerpunktpositionen zu bestimmen und dann die Schwerpunktpositionen mit den temperaturabhängigen Versatzwerten zu korrigieren.

Ferner ist es bei dem in den Figuren 4 und 5 dargestellten Ausführungsbeispiel vorgesehen, die Temperatur während der Aufnahme jedes Einzelbildes zu messen und abzuspeichern (Schritt S4). Dies ist jedoch nicht unbedingt erforderlich. Da sich die Temperatur in der Regel im Vergleich zu der zur Aufnahme eines Einzelbildes benötigten Zeit langsam ändert, ist es auch möglich, die Temperatur in größeren Zeitabständen zu messen und für die dazwischenliegenden Einzelbilder einfach den letzten gemessenen Temperaturwert zu benutzen.

Die in Figur 3 gezeigte Datentabelle ist für den Fall vorgesehen, dass für die Driftkorrektur nur ein einziger Temperaturwert genutzt wird, d.h. nur das Erfassungssignal eines der in Figur 2 gezeigten Temperatursensoren 50 bis 60 verwendet wird. Es ist jedoch ebenso möglich, mehrere Temperatursensoren und damit mehrere Temperaturwerte über entsprechend bereitgestellte Zuordnungsdaten zur Driftkorrektur zu nutzen.

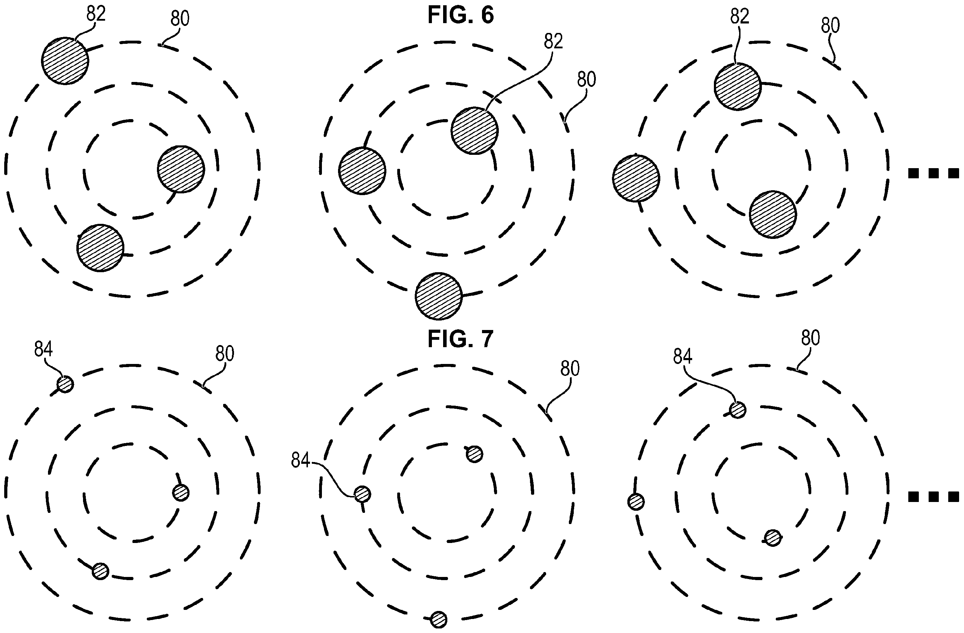

In den Figuren 6 bis 9 ist nochmals veranschaulicht, wie durch das erfindungsgemäße Verfahren einer thermisch verursachten Bilddrift in Folge einer Relativbewegung zwischen der abzubildenden Probe 16 und dem Aufnahmeobjektiv 40 entgegengewirkt werden kann. Dabei soll zur Vereinfachung der Darstellung angenommen werden, dass die abzubildende Probenstruktur aus drei konzentrischen Kreislinien gebildet ist. Diese sind in den Figuren 6 bis 9 mit 80 bezeichnet.

In Figur 6 sind von links nach rechts aufeinanderfolgende Rohdaten-Einzelbilder dargestellt, in denen jeweils eine andere aktive Markerstruktur abgebildet ist. Die aktiven Marker erscheinen in den Rohdaten-Einzelbildern als ausgedehnte Lichtverteilungen 82, deren Größe durch die Auflösungsgrenze des Aufnahmeobjektivs 40 bestimmt ist. Wie der Figur 6 zu entnehmen ist, haben die Lichtverteilungen 82 jeweils einen mittleren Abstand voneinander, der größer als diese die Größe der Lichtverteilungen 82 bestimmende Auflösungsgrenze ist.

In Figur 7 ist veranschaulicht, wie aus den Rohdaten-Einzelbildern nach Figur 6 Schwerpunktpositionen 84 der Lichtverteilungen 82 ermittelt werden.

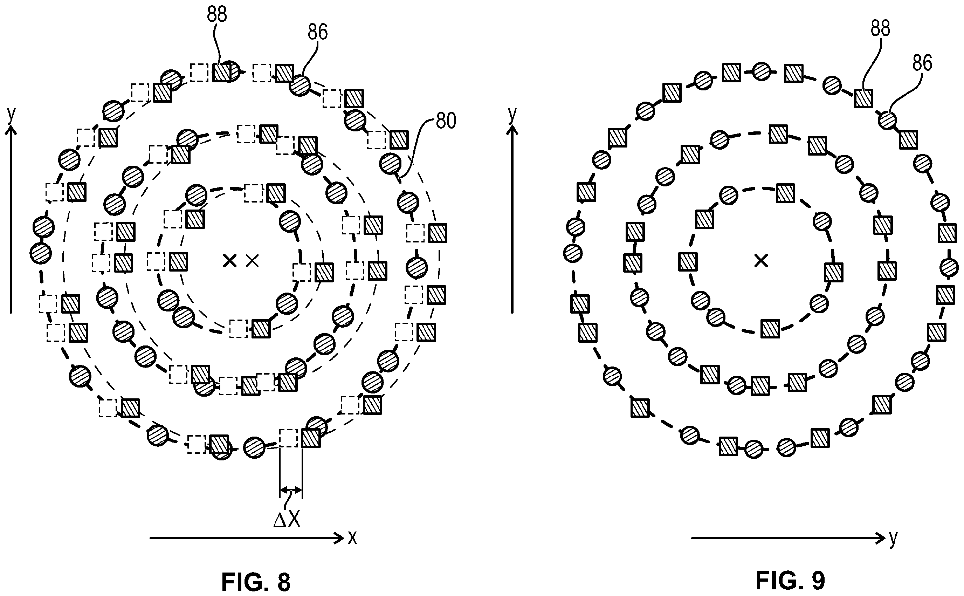

Figur 8 zeigt, wie es beispielsweise infolge einer thermisch verursachten Relativbewegung zwischen der abzubildenden Probenstruktur 80 und dem Aufnahmeobjektiv 40, die während der Aufnahme zweier aufeinanderfolgender Rohdaten-Einzelbilder auftritt, zu einer Verschlechterung der Ortsauflösung des Gesamtbildes kommen kann. Dabei soll in diesem lediglich der Veranschaulichung dienenden Beispiel die aus einem ersten Rohdaten-Einzelbild bestimmten Schwerpunktpositionen durch Kreise 86 und die aus einem später aufgenommenen zweiten Rohdaten-Einzelbild bestimmten Schwerpunktpositionen mit Quadraten 88 bezeichnet sein. Ferner soll angenommen werden, dass die während der Aufnahme der Rohdaten-Einzelbilder gemessene Temperatur für diese beiden Rohdaten-Einzelbilder unterschiedliche Werte aufweist.

Figur 8 zeigt, dass die thermisch induzierte Bilddrift eine Verschiebung des zweiten Rohdaten-Einzelbildes gegenüber dem ersten Rohdaten-Einzelbild verursacht. Dementsprechend weisen die aus dem zweiten Rohdaten-Einzelbild abgeleiteten Schwerpunktpositionen 88 jeweils einen Positionsversatz auf, der im Ergebnis zu einer Verschlechterung der Ortsauflösung des aus den beiden Einzelbildern zusammengesetzten Gesamtbildes führt. In dem Beispiel nach Figur 8 soll der Positionsversatz ΔX betragen.

In Figur 9 ist das aus den Schwerpunktpositionen 86 und 88 zusammengesetzte Gesamtbild nach der Driftkorrektur gezeigt. In dem vorliegenden Beispiel besteht die erfindungsgemäße Driftkorrektur darin, die ermittelten Schwerpunktpositionen 88 gemäß Figur 8 unter Bezugnahme auf Zuordnungsdaten, wie sie beispielhaft in Figur 3 gezeigt sind, mit einem Versatzwert zu korrigieren, um den Positionsversatz ΔX zu kompensieren. Wie aus Figur 9 hervorgeht, spiegelt das driftkorrigierte Gesamtbild die Probenstruktur 80 mit einer höheren örtlichen Auflösung wider als das nichtdriftkorrigierte Gesamtbild.

## Patentansprüche

1. Verfahren zur bildlichen Darstellung einer Probe (16) unter Verwendung einer lichtmikroskopischen Einrichtung (100), die eine Abbildungsoptik (40) und einen Bildsensor (28) enthält, mit folgenden Schritten:
Aufnehmen einer Sequenz von Einzelbildern durch sequentielles Abbilden der Probe (16) mittels der Abbildungsoptik (40) auf den Bildsensor (28),
wobei für die Aufnahme jedes Einzelbildes die Probe (16) jeweils mit einer Markerstruktur versehen wird, in der einzelne Marker mittels der Abbildungsoptik (40) in Form von räumlich voneinander trennbaren Lichtverteilungen (82) auf den Bildsensor (28) abbildbar sind,
Ermitteln von Schwerpunktpositionen (84, 86, 88) der Lichtverteilungen (82), die in den jeweiligen Einzelbildern die abgebildeten Marker darstellen,
Überlagern der ermittelten Schwerpunktpositionen (84, 86, 88) zu einem Gesamtbild der Probe (16), und
Korrigieren der ermittelten Schwerpunktpositionen anhand einer Driftgröße, **dadurch gekennzeichnet, dass**
während der Aufnahme der Sequenz von Einzelbildern eine bilddriftinduzierende Temperaturgröße (ΔT₁, ΔT₂, ..., ΔTₙ) mittels Temperatursensor (50, 52, ..., 60) gemessen und in einem Speichermodul (302) gespeichert wird, und
der bilddriftinduzierenden Temperaturgröße (ΔT₁, ΔT₂, ..., ΔTₙ) an Hand vorbestimmter Zuordnungsdaten (400) die Driftgröße in Form einer temperaturabhängigen Driftgröße (ΔX₁, ΔX₂, ..., ΔXₙ; ΔY₁, ΔY₂, ..., ΔYₙ) zugeordnet wird, anhand der die ermittelten Schwerpunktpositionen (84, 86, 88) rechnerisch korrigiert werden.

2. Verfahren nach Anspruch 1, **dadurch gekennzeichnet, dass** die Zuordnungsdaten (400) experimentell bestimmt und in der lichtmikroskopischen Einrichtung (100) gespeichert werden.

3. Verfahren nach Anspruch 2, **dadurch gekennzeichnet, dass**
zur Bestimmung der Zuordnungsdaten (400) eine Referenzstruktur mit mindestens einem Referenzmarker bereitgestellt wird,
die bilddriftinduzierende Temperaturgröße auf mehrere Referenztemperaturwerte eingestellt wird,
für jeden Referenztemperaturwert ein Referenzeinzelbild der Referenzstruktur aufgenommen wird, wobei der Referenzmarker der Referenzstruktur mittels der Abbildungsoptik in Form einer Referenzlichtverteilung auf den Bildsensor abgebildet wird,
für jeden Referenztemperaturwert eine Referenzschwerpunktposition der zugehörigen Referenzlichtverteilung ermittelt wird,
aus der Veränderung der Referenzschwerpunktpositionen in Abhängigkeit der Referenztemperaturwerte die temperaturabhängige Driftgröße bestimmt wird.

4. Verfahren nach einem der vorhergehenden Ansprüche, **dadurch gekennzeichnet, dass** die Temperatur mindestens eines Bauteils (12, 14, 42) der lichtmikroskopischen Einrichtung (100) als bilddriftinduzierende Temperaturgröße (ΔT₁, ΔT₂, ..., ΔTₙ) gemessen wird.

5. Verfahren nach Anspruch 4, **dadurch gekennzeichnet, dass** die Temperatur in oder an einem Probentisch (14) und/oder in oder an einer für die Abbildungsoptik (40) vorgesehenen Haltevorrichtung (42) und/oder in oder an einem Stativ (12), auf dem der Probentisch (14) aufliegt, gemessen wird.

6. Verfahren nach einem der vorhergehenden Ansprüche, **dadurch gekennzeichnet, dass** die gemessene Temperaturgröße (ΔT₁, ΔT₂, ..., ΔTₙ) um einen Trägheitskorrekturwert geändert und die Driftgröße (ΔX₁, ΔX₂, ..., ΔXₙ ; ΔY₁, ΔY₂, ..., ΔYₙ) anhand der geänderten Temperaturgröße bestimmt wird.

7. Verfahren nach Anspruch 6, **dadurch gekennzeichnet, dass** der Trägheitskorrekturwert in Abhängigkeit der Änderungsrate eingestellt wird, mit der sich die gemessene Temperaturgröße (ΔT₁, ΔT₂, ..., ΔTₙ) zeitlich ändert.

8. Lichtmikroskopische Einrichtung (100) zur Durchführung des Verfahrens nach
einem vorhergehenden Ansprüche, mit
einer Abbildungsoptik (40) zum Abbilden der Probe (16),
einem Bildsensor (28) zum räumlich getrennten Erfassen der durch die Abbildungsoptik (40) erzeugten, die abgebildeten Marker darstellenden Lichtverteilungen (82), und
einer Bildverarbeitungseinheit mit einem Ermittlungsmodul (306) zum Ermitteln von Schwerpunktpositionen der Lichtverteilungen (82), die in den jeweiligen Einzelbildern die abgebildeten Marker darstellen, und einem Überlagerungsmodul (312) zum Überlagern der ermittelten Schwerpunktpositionen (82, 84, 86) zu einem Gesamtbild der Probe (16),
**dadurch gekennzeichnet, dass** die Bildverarbeitungseinheit ferner umfasst:
mindestens einen Temperatursensor (50 bis 60), der eingerichtet ist, die bilddriftinduzierenden Temperaturgröße (ΔT₁, ΔT₂, ..., ΔTₙ) während der Aufnahme der Sequenz von Einzelbildern zu messen, ein Speichermodul (302) zum Speichern der gemessenen Temperaturgröße (ΔT₁, ΔT₂, ..., ΔTₙ),
ein Zuordnungsmodul (308) zum Zuordnen der bilddriftinduzierenden Temperaturgröße (ΔT₁, ΔT₂, ..., ΔTₙ) zu der temperaturabhängigen Driftgröße (ΔX₁, ΔX₂, ..., ΔXₙ ; ΔY₁, ΔY₂, ..., ΔYₙ) an Hand der vorbestimmten Zuordnungsdaten (400), und
ein Korrekturmodul (310) zum rechnerischen Korrigieren der ermittelten Schwerpunktpositionen (84, 86, 88) anhand der Driftgröße (ΔX₁, ΔX₂, ..., ΔXₙ ; ΔY₁, ΔY₂, ..., ΔYₙ).

9. Einrichtung (100) nach Anspruch 8, **gekennzeichnet durch** einen nicht flüchtigen Datenspeicher (314), in dem die Zuordnungsdaten (400) gespeichert sind.

10. Einrichtung (100) nach Anspruch 8 oder 9, **dadurch gekennzeichnet, dass** der mindestens eine Temperatursensor einen ersten Temperatursensor (50, 52, 54), der in oder an einem Probentisch (14) angeordnet ist, und/oder einen zweiten Temperatursensor (56) umfasst, der in oder an einer für die Abbildungsoptik (40) vorgesehenen Haltevorrichtung (42) angeordnet ist, und/oder einen dritten Temperatursensor (60) umfasst, der in oder an einem Stativ (12), auf dem der Probentisch (14) aufliegt, angeordnet ist.

11. Einrichtung (100) nach einem der vorhergehenden Ansprüche, **dadurch gekennzeichnet, dass** der mindestens eine Temperatursensor einen Temperatursensor (60) aufweist, der einen an einer Oberfläche der Einrichtung (100) montierten Sensorkörper (62) und einen an den Sensorkörper (62) anschließenden Temperaturfühler (64) aufweist, der mit dem Inneren der Einrichtung (100) thermisch gekoppelt ist.

12. Einrichtung (100) nach einem der Ansprüche 8 bis 11, **dadurch gekennzeichnet, dass** die Abbildungsoptik (40) an einer an einem Probentisch (14) angebrachten Haltevorrichtung (42) gehalten ist.

13. Einrichtung (100) nach Anspruch 12, **gekennzeichnet durch** einen an dem Probentisch (14) angebrachten, mit der Haltevorrichtung (42) gekoppelten Aktor (44) zum Bewegen der Haltevorrichtung (42) längs der optischen Achse (O) der Abbildungsoptik (40).

14. Einrichtung (100) nach Anspruch 13, **dadurch gekennzeichnet, dass** die Haltevorrichtung im Wesentlichen rotationssymmetrisch zur optischen Achse (O) der Abbildungsoptik (40) ausgebildet ist.

## Claims

1. A method for producing an image of a sample (16) using a light microscopy apparatus (100) including imaging optics (40) and an image sensor (28), comprising the following steps:
acquiring a sequence of individual images by sequentially imaging the sample (16) through the imaging optics (40) onto the image sensor (28),
the sample (16) being provided, for the acquisition of each individual image, with a marker pattern, in which individual markers can be imaged in the form of spatially separable light distributions (82) through the imaging optics (40) onto the image sensor (28),
determining centroid positions (84, 86, 88) of the light distributions (82), which represent the imaged markers in the respective individual images,
superimposing the determined centroid positions (84, 86, 88) to form a complete image of the sample (16), and
correcting the determined centroid positions on the basis of a drift value,
**characterized in that**
an image-drift-inducing temperature value (ΔT₁, ΔT₂, ..., ΔTₙ) is measured by means of a temperature sensor (50, 52, ..., 60) and stored in a storage module (302) during the acquisition of the sequence of individual images, and
the drift value in the form of a temperature-dependent drift value (ΔX₁, ΔX₂, ..., ΔXₙ; ΔY₁, ΔY₂, ..., ΔYₙ) is correlated to the image-drift-inducing temperature value (ΔT₁, ΔT₂, ..., ΔTₙ) based on predetermined correlation data (400),
the determined centroid positions (84, 86, 88) are corrected based on the drift value (ΔX₁, ΔX₂, ..., ΔXₙ; ΔY₁, ΔY₂, ..., ΔYₙ) by way of calculation.

2. The method according to claim 1, **characterized in that** the correlation data (400) is experimentally determined and stored in the light microscopy apparatus (100).

3. The method according to claim 2, **characterized in that**
for determining the correlation data (400) a reference pattern including at least one reference marker is provided,
the image-drift-inducing temperature value is set to a plurality of reference temperature values,
a reference image of the reference pattern is captured for each reference temperature value, the imaging optics imaging the reference marker of the reference pattern in the form of a reference light distribution onto the image sensor,
a reference centroid position of the corresponding reference light distribution is determined for each reference temperature value,
the temperature-dependent drift value is determined from the change in the reference centroid position as a function of the reference temperature values.

4. The method according to one of the preceding claims, **characterized in that** the temperature of at least one component (12, 14, 42) of the light microscopy apparatus (100) is measured as an image-drift-inducing temperature value (ΔT₁, ΔT₂, ..., ΔTₙ).

5. The method according to claim 4, **characterized in that** the temperature is measured in or on a sample stage (14) and/or in or on a holding device (42) provided for the imaging optics (40) and/or in or on a stand (12), on which the sample stage (14) rests.

6. The method according to one of the preceding claims, **characterized in that** the measured temperature value (ΔT₁, ΔT₂, ..., ΔTₙ) is modified by an inertia compensation value, and the drift value (ΔX₁, ΔX₂, ..., ΔXₙ; ΔY₁, ΔY_{2,} ..., ΔYₙ) is determined based on the modified temperature value.

7. The method according to claim 6, **characterized in that** the inertia compensation value is set based on the rate of change with time of the measured temperature value (ΔT₁, ΔT₂, ..., ΔTₙ).

8. A light microscopy apparatus (100) for carrying out the method according to one of the preceding claims, comprising
imaging optics (40) for forming an image of the sample (16),
an image sensor (28) for sensing, in a spatially separated manner, the light distributions (82) which are produced by the imaging optics (40) and represent the imaged markers, and
an image-processing unit including a determination module (306) for determining centroid positions of the light distributions (82), which centroid positions represent the imaged markers in the respective individual images, and including
a superposition module (312) for superimposing the determined centroid positions (82, 84, 86) to form a complete image of the sample (16),
**characterized in that** the image-processing unit further includes:
at least one temperature sensor (50 to 60) configured to measure the image-drift-inducing temperature value (ΔT₁, ΔT₂, ..., ΔTₙ) during the acquisition of the sequence of individual images,
a storage module (302) for storing the measured temperature value (ΔT₁, ΔT₂, ..., ΔTₙ),
a correlation module (308) for correlating the image-drift-inducing temperature value (ΔT₁, ΔT₂, ..., ΔTₙ) to the temperature-dependent drift value (ΔX₁, ΔX₂, ..., ΔXₙ; ΔY₁, ΔY₂, ..., ΔYₙ) based on the predetermined correlation data (400), and
a correction module (310) for correcting the determined centroid positions (84, 86, 88) based on the drift value (ΔX₁, ΔX₂, ..., ΔXₙ; ΔY₁, ΔY₂, ..., ΔYₙ) by way of calculation.

9. The apparatus (100) according to claim 8, **characterized by** a non-volatile data storage device (314), in which the correlation data (400) is stored.

10. The apparatus (100) according to claim 8 or 9, **characterized in that** the at least one temperature sensor includes a first temperature sensor (50, 52, 54) disposed in or on a sample stage (14) and/or a second temperature sensor (56) disposed in or on a holding device (42) provided for the imaging optics (40) and/or a third temperature sensor (60) disposed in or on a stand (12), on which the sample stage (14) rests.

11. The apparatus (100) according to one of the preceding claims, **characterized in that** the at least one temperature senor includes a temperature sensor (60) having a sensor body (62) mounted on a surface of the apparatus (100) and an adjoining temperature sensing probe (64) thermally coupled with the interior of the apparatus (100).

12. The apparatus (100) according to one of the claims 8 to 11, **characterized in that** the imaging optics (40) are held on a holding device (42) attached to a sample stage (14).

13. The apparatus (100) according to claim 12, **characterized by** an actuator (44) which is attached to the sample stage (14), coupled to the holding device (42), and used for moving the holding device (42) along the optical axis (O) of the imaging optics (40).

14. The apparatus (100) according to claim 13, **characterized in that** the holding device (42) is substantially rotationally symmetric with respect to the optical axis (O) of the imaging optics (40).

## Revendications

1. Procédé pour la représentation imagée d'un échantillon (16) au moyen d'un dispositif de microscopie optique (100), qui contient une optique d'imagerie (40) et un capteur d'image (28), le procédé comprenant les étapes suivantes :
l'enregistrement d'une séquence d'images individuelles par imagerie séquentielle de l'échantillon (16) au moyen de l'optique d'imagerie (40) sur le capteur d'image (28), dans lequel l'échantillon (16), pour l'enregistrement de chaque image individuelle, étant pourvu dans chaque cas d'une structure de marqueurs, dans laquelle différents marqueurs peuvent être reproduits sur le capteur d'image (28) au moyen de l'optique d'imagerie (40) sous forme de distributions de lumière (82) pouvant être séparées les unes des autres dans l'espace,
la détermination des positions des centres de gravité (84, 86, 88) des distributions de lumière (82), qui représentent les marqueurs reproduits dans chaque image individuelle,
la superposition des positions des centres de gravité (84, 86, 88) déterminées pour obtenir une image totale de l'échantillon (16), et
la correction des positions du centre de gravité déterminées sur la base d'une grandeur de décalage,
**caractérisé en ce que**
pendant l'enregistrement de la séquence d'images individuelles, une grandeur de température (ΔT₁, ΔT₂, ..., ΔTₙ) induisant un décalage d'image est mesurée au moyen du capteur de température (50, 52, ..., 60) et mise en mémoire dans un module de mise en mémoire (302), et à la grandeur de température (ΔT₁, ΔT₂, ..., ΔTₙ) induisant un décalage d'image est associée, sur la base de données d'association (400) prédéfinies, la grandeur de décalage sous forme d'une grandeur de décalage dépendante de la température (ΔX₁, ΔX₂, ..., ΔXₙ ; ΔY₁, ΔY₂, ..., ΔYₙ), sur la base de laquelle les positions du centre de gravité (84, 86, 88) déterminées sont corrigées par calcul.

2. Procédé selon la revendication 1, **caractérisé en ce que** les données d'association (400) sont déterminées de façon expérimentale et mises en mémoire dans le dispositif de microscopie optique (100).

3. Procédé selon la revendication 2, **caractérisé en ce que**
pour déterminer les données d'association (400), une structure de référence présentant au moins un marqueur de référence est fournie,
la grandeur de température induisant un décalage d'image est réglée sur plusieurs valeurs de température de référence,
une image individuelle de référence de la structure de référence est enregistrée pour chaque valeur de température de référence, le marqueur de référence de la structure de référence étant reproduit au moyen de l'optique d'imagerie sous forme d'une distribution de lumière sur le capteur d'image,
pour chaque valeur de température de référence, une position du centre de gravité de référence de la distribution de lumière de référence associée est déterminée,
la grandeur de décalage dépendante de la température est déterminée à partir de la modification des positions du centre de gravité de référence en fonction des valeurs de température de référence.

4. Procédé selon l'une quelconque des revendications précédentes, **caractérisé en ce que** la température d'au moins un élément (12, 14, 42) du dispositif de microscopie optique (100) est mesurée en tant que grandeur de température (ΔT₁, ΔT₂, ..., ΔTₙ) induisant un décalage d'image.

5. Procédé selon la revendication 4, **caractérisé en ce que** la température est mesurée dans ou sur une platine porte-échantillon (14) et/ou dans ou sur un dispositif de retenue (42) prévu pour l'optique d'imagerie (40) et/ou dans ou sur un support (12) sur lequel repose la platine porte-échantillon (14).

6. Procédé selon l'une quelconque des revendications précédentes, **caractérisé en ce que** la grandeur de température (ΔT₁, ΔT₂, ..., ΔTₙ) mesurée est modifiée d'une valeur de correction d'inertie et la grandeur de décalage (ΔX₁, ΔX₂, ..., ΔXₙ ; ΔY₁, ΔY₂, ..., ΔYₙ) est déterminée sur la base de la grandeur de température modifiée.

7. Procédé selon la revendication 6, **caractérisé en ce que** la valeur de correction d'inertie est réglée en fonction de la vitesse de modification à laquelle la grandeur de température (ΔT₁, ΔT₂, ..., ΔTₙ) mesurée varie dans le temps.

8. Dispositif de microscopie optique (100) pour la mise en oeuvre du procédé selon l'une quelconque des revendications précédentes, comprenant
une optique d'imagerie (40) pour la reproduction de l'échantillon (16),
un capteur d'image (28) pour l'acquisition séparée dans l'espace des distributions de lumière (82) générées par l'optique d'imagerie (40), représentant les marqueurs reproduits, et
une unité de traitement d'image comprenant un module de détermination (306) destiné à déterminer des positions du centre de gravité des distributions de lumière (82), qui représentent les marqueurs reproduits dans chaque image individuelle, et un module de superposition (312) destiné à superposer les positions du centre de gravité (82, 84, 86) déterminées pour obtenir une image totale de l'échantillon (16), **caractérisé en ce que** l'unité de traitement d'image comprend en outre :
au moins un capteur de température (50 à 60), qui est conçu pour mesurer la grandeur de température (ΔT₁, ΔT₂, ..., ΔTₙ) induisant un décalage d'image pendant l'enregistrement de la séquence d'images individuelles,
un module de mise en mémoire (302) destiné à mettre en mémoire la grandeur de température (ΔT₁, ΔT₂, ..., ΔTₙ) mesurée,
un module d'association (308) destiné à associer la grandeur de température (ΔT₁, ΔT₂, ..., ΔTₙ) induisant un décalage d'image à la grandeur de décalage (ΔX₁, ΔX₂, ..., ΔXₙ ; ΔY₁, ΔY₂, ..., ΔYₙ) dépendante de la température sur la base des données d'association (400) prédéfinies, et
un module de correction (310) pour la correction par calcul des positions du centre de gravité (84, 86, 88) déterminées sur la base de la grandeur de décalage (ΔX₁, ΔX₂, ..., ΔXₙ ; ΔY₁, ΔY₂, ..., ΔYₙ).

9. Dispositif (100) selon la revendication 8, **caractérisé par** une mémoire de données non volatile (314), dans laquelle les données d'association (400) sont mises en mémoire.

10. Dispositif (100) selon la revendication 8 ou 9), **caractérisé en ce que** le au moins capteur de température comporte un premier capteur de température (50, 52, 54), qui est agencé dans ou sur une platine porte-échantillon (14), et/ou un deuxième capteur de température (56), qui est agencé dans ou sur un dispositif de retenue (42) prévu pour l'optique d'imagerie (40), et/ou un troisième capteur de température (60), qui est agencé dans ou sur un support (12) sur lequel repose la platine porte-échantillon (14).

11. Dispositif (100) selon l'une quelconque des revendications précédentes, **caractérisé en ce que** le au moins un capteur de température comporte un capteur de température (60), qui présente un corps de capteur (62) monté sur une surface du dispositif (100) et une sonde de température (64) raccordée au corps de capteur (62), qui est couplée thermiquement à l'intérieur du dispositif (100).

12. Dispositif (100) selon l'une quelconque des revendications 8 à 11, **caractérisé en ce que** l'optique d'imagerie (40) est retenue sur un dispositif de retenue (42) monté sur une platine porte-échantillon (14).

13. Dispositif (100) selon la revendication 12, **caractérisé par** un actionneur (44) couplé au dispositif de retenue (42), monté sur la platine porte-échantillon (14) et destiné à déplacer le dispositif de retenue (42) le long de l'axe optique (O) de l'optique d'imagerie (40).

14. Dispositif (100) selon la revendication 13, **caractérisé en ce que** le dispositif de retenue est sensiblement symétrique en rotation par rapport à l'axe optique (O) de l'optique d'imagerie (40).
